# EUROPEAN PATENT SPECIFICATION

(11) **EP 3 722 735 B1**
(45) Date of publication and mention of the grant of the patent: **02.09.2026**
(21) Application number: 19167928.1
(22) Date of filing: 08.04.2019
(51) Int. Cl.: F41G 3/02, F41G 3/04, F41G 7/00, F41H 11/02, G01S 13/66, G01S 13/72, G01S 13/74, G01S 17/74

(54) **SYSTEM AND METHOD FOR ALIGNING GBAD-PLATFORMS**
SYSTEM UND VERFAHREN ZUR AUSRICHTUNG VON GBAD-PLATTFORMEN
SYSTÈME ET PROCÉDÉ D'ALIGNEMENT DE PLATEFORMES GBAD

(43) Date of publication of application: 14.10.2020
(73) Proprietor: HENSOLDT Sensors GmbH, 82024 Taufkirchen (DE)
(72) Inventor: Ruppel, Michael, 89278 Nersingen (DE); Lüddecke, Sven, 89077 Ulm (DE)
(74) Representative: LifeTech IP Spies & Behrndt Patentanwälte PartG mbB

(56) References cited:
- EP-A2- 0 359 950
- CN-B- 103 925 842
- DE-A1- 3 131 089
- US-B1- 9 886 040

## Description

The present invention relates to a system and a method for aligning Ground Based Air Defence (GBAD-) platforms and, in particular, for aligning a fire control sensor and at least one launcher, which both may be installed on vehicles.

### BACKGROUND

On platforms for ground-based air defence at least one fire control sensor tracks targets and sends track information via a launcher to a missile which then navigates to hit the target. The sensor may be any detecting unit, such as a radar, that is able to sense or detect the target and to track target movements to continuously determine the relative position between the sensor and the target.

Short Range GBAD systems are typically smaller and integrate missiles and the fire control sensor on the same platform with an inherent alignment. However, this soon leads to larger platforms with some mobility penalties. It is much more convenient to have separate platforms which comes with the challenge of alignment. The relative position and bearing between launcher (or missile) and target is needed for correct operation. Since the target is tracked by the sensor, the position of the launcher also relative to the sensor and its orientation is needed.

Conventional techniques, in particular when GPS is not available, for alignment of mobile GBAD-platforms installed on vehicles are very time consuming. The north direction may be determined by a compass. But the relative position of the exemplary vehicles is conventionally determined using topographical surveys, which takes valuable time.

It is of major importance to determine the relative positions of the system components (sensor and launcher) to hand over correct parameters. In other words, there is a demand that the sensor and launcher/missile align their coordinate systems efficiently, wherein the origin of the reference coordinate system may be set at the sensor position as it may measure several targets and, in addition, may serve several launchers. In particular, there is a demand for a system and a method that is able to align GBAD platforms quickly and reliably without relying on GPS.

EP 0 359 950 A2 discloses a conventional method for a mutual coarse alignment of a fire control and weapon system in a combat unit with at least one fire control system.

### SUMMARY OF THE INVENTION

At least some of the above-mentioned problems are solved by a GBAD platform according to claim 1 and a corresponding method according to claim 6. The dependent claims refer to further advantageous realizations for the subject matters of the independent claims.

The present invention relates to a ground base air defense (GBAD-) platform.

The platform inter alia comprises a fire control sensor for determining a position of a target, a launcher for missiles to hit the target, and a system comprising: an identification mark to be installed at the launcher and being configured to respond to a signal from the fire control sensor; and a processing unit configured to determine, based on the response of the identification mark, a relative position between the launcher and the sensor to enable a control of the missile to hit the target.

The fire control sensor is configured to track positions of the target and the system may, optionally, further comprise at least one secure radio link or any other link from the processing unit to the fire control sensor and/or to the launcher. The processing unit is configured to receive from the fire control sensor, via the at least one secure radio link or the other link, data identifying positions and/or a direction of the target and data for determining the relative position of the launcher and the fire control sensor.

The identification mark is configured to respond to a received signal from the fire control sensor with a response signal that differs from a sensor transmission signal by at least one of the following: a transmission frequency, a pulse width, a different pulse coding, an additional identification code transmitted back to the fire control sensor.
ted back to the fire control sensor.

The identification mark includes is a racon.

Optionally, the system additionally comprises at least one further identification mark of a same or different type as the identification mark. All or some of the identification marks may be installed at the launcher (or near the launcher with a fixed relative position to each other) to determine an orientation of the launcher with respect to a reference direction.

The fire control sensor includes a radar unit. In addition, the identifications mark comprises an antenna with a directivity adjustable towards the fire control sensor (to prevent counter measures). Also, the fire control sensor may include a directional antenna arrangement to enable a spatial resolution (e.g. a MIMO system).

Optionally, the identification mark (or the processing unit or an associated control unit) is configured to determine an orientation of the launcher relative a reference direction. For example, the antenna system of the identification mark may be configured to determine a direction of an incoming radar signal. This information together with a known orientation of the launcher relative to the identification mark may be used to determine the orientation of the launcher with respect to the reference direction (e.g. the connection line between the launcher and the first control sensor).

The processing unit is an integrated part of the fire control sensor.

Optionally, the fire control sensor and/or the launcher of the platform include a compass for calibrating the fire control sensor and/or the launcher relative to a common north direction (or to any other reference direction).

Further embodiments relate to a method for aligning a fire control sensor and a launcher, the method inter alia comprising:
- Sensing, by the fire control sensor, an identification mark at the launcher;
- Determining, based on the sensed identification mark, a relative position between the fire control sensor and the launcher;
- Determining at least one position of a target by the fire control sensor; and
- Controlling a missile launched by the launcher based on the at least one position of the target and the determined relative position to hit the target.

The method may further comprise a step of determining an orientation of a local coordinate system of the fire control sensor and/or the launcher relative to a predetermined direction (e.g. a common north using a compass or by using two exemplary racons installed on the launcher).

Optionally, multiple launchers are associated to the fire control sensor and the method may further comprise:
- Determining positions of the multiple launchers relative to the fire control sensor; and thereafter
- Controlling missiles launched by the multiple launchers based on track data from the fire control sensor.

Embodiments overcome at least some of the above-mentioned problems by using the sensor itself to find the relative position of the components, instead of relying on topographical surveys. According to embodiments, the relative position between sensor and launcher is measured by the sensor by using an identification mark to reliably distinguish the launcher from the background. A common north reference can be gained by a precise compass in the sensor and in the launcher.

For a radar sensor as fire control sensor, the identification mark is a racon (=radar beacon) that is installed directly on the launcher, to enable the 3D position measurement relative to the sensor position. For an electro optical or infrared sensor this may be a temporary visual identification mark during the alignment phase. Together with the common north bearing reference from a compass, the sensor and the launcher are aligned quickly and reliably.

Embodiments provide in particular the advantage that the alignment process is independent from GPS which might be jammed in GBAD scenarios.

### BRIEF DESCRIPTION OF THE DRAWINGS

Various embodiments of the present invention will be described in the following by way of examples only, and with respect to the accompanying drawings, in which:
- Fig. 1: depicts a system for alignment of a ground base air defense (GBAD-) platform according to an embodiment of the present invention.
- Fig. 2: illustrates a method for alignment of a GBAD-platform according to an embodiment of the present invention.

### DETAILED DESCRIPTION

Various examples will now be described more fully with reference to the accompanying drawings in which some examples are illustrated.

Accordingly, while examples are capable of various modifications and alternative forms, the illustrative examples in the figures and will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

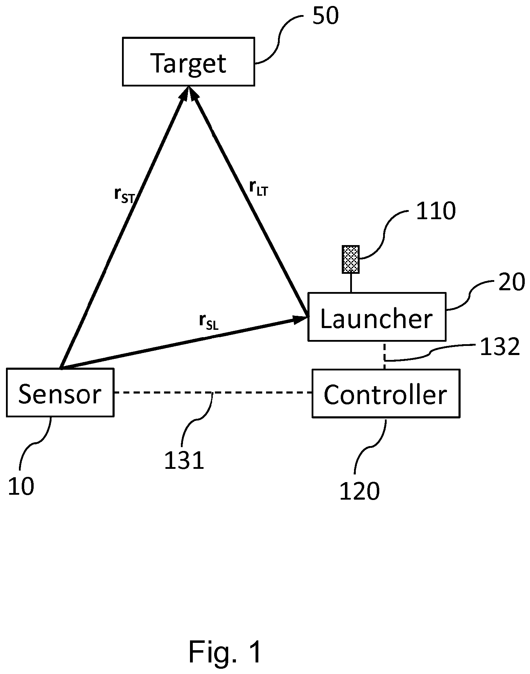

**Fig. 1** depicts a system that is suitable for alignment of a ground base air defense (GBAD-) platform 10, 20. The platform 10, 20 comprises at least a fire control sensor 10 and a launcher 20. The fire control sensor 10 is configured to sense or detect one or more targets 50 and the launcher 20 is configure to launch missiles to hit the target(s) 50. The system comprises: an identification mark 110 and a processing unit 120 (controller). The identification mark 110 is configured to be installed on the launcher 20 or near the launcher with a predetermined relative position. The identification mark 110 is further configured to respond to a signal from the fire control sensor 10 in predetermined manner. The processing unit 120 is configured to determine, based on the response of the identification mark 110, a relative position between the launcher 20 and the sensor 10.

If this system is used in a GBAD engagement the sensor 10 tracks the target 50 and sends the track information via the launcher 20 to the missile which then navigates to hit the target.

The fire control sensor 10 includes a radar and the identification mark 110 includes a radar beacon (racon) installed on or at the launcher 20. It responds on the radar signal with a unique reaction, typically it sends the signal back on a different frequency. Alternatively, a different pulse coding may be used. With the beacon 110 configured in advance, e. g. by a link 131, 132, a first radar scan may be used for the alignment and the system is then operational with the second scan. The links 131, 132 may be any kind of communication links (wireless or wired), e.g., for radio signals, fibre optic signals, laser etc.

To reliably distinguish the launcher 20 from the background the identification mark 110 should respond in a predetermined way (e.g. using a specific identification). For example, when the exemplary racon 110 receives a radar pulse, it may respond with a signal on the same frequency or a different frequency. According to embodiments, the racon(s) 110 are frequency-agile with a wide-band receiver that detects the incoming radar pulse from the sensor 10, tunes the transmitter and responds, for example, with a 25 microsecond long signal within 700 nanoseconds. Such unique reactions of the racon 110 will also separate the aligning from the process of identifying a target 50. It is understood that embodiments shall not be limited on particular responses - at least as long as they are suitable to not confuse the launcher 20 with a target 50 or a background signal.

In any case, the fire control sensor 10 aims at the identification mark 110 to measure the Vector **r**_{SL} which is then subtracted from the target vector **r**_{ST} to generate the engagement relevant vector **r**_{LT}, which is used to direct the missile into the target.

It is apparent, in this data flow the exemplary radar 10 and launcher/missile 20 need to align their coordinate systems. The origin of this reference coordinate system can be selected freely. Usually, the sensor position is taken as the origin as it measures several targets 50 and may serve several launchers 20.

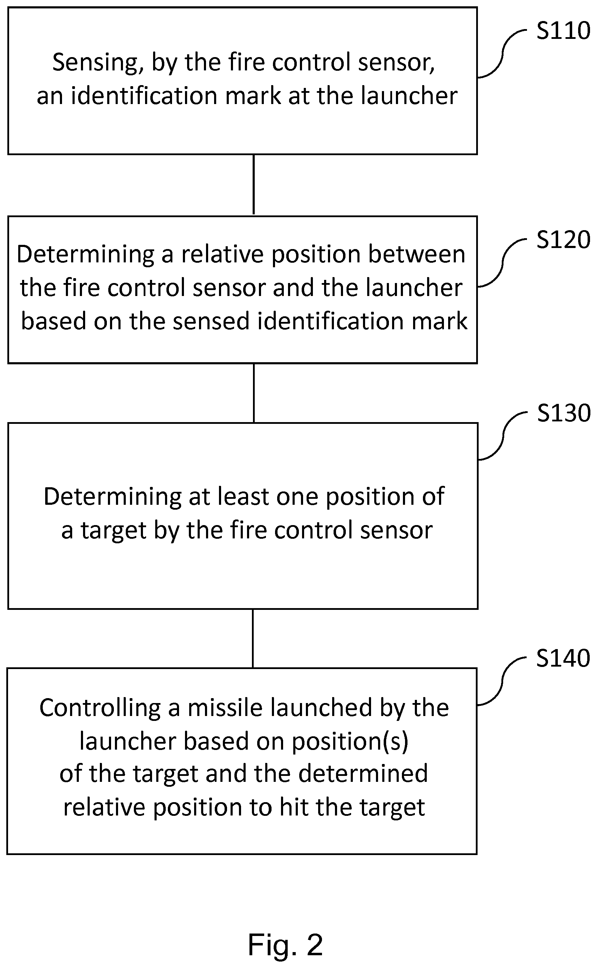

**Fig. 2** depicts a flow chart for a corresponding method for alignment of a GBAD-platform according to an embodiment of the present invention. The method comprises:
- Sensing S110, by the fire control sensor 10, an identification mark 110 at the launcher 20;
- Determining S120 a relative position between the fire control sensor 10 and the launcher 20 based on the sensed identification mark 110;
- Determining S130 at least one position of a target 50 by the fire control sensor (10); and
- Controlling S140 a missile launched by the launcher 20 based on the at least one position of the target 50 and the determined relative position to hit the target 50.

In addition, the orientation of the launcher 20 and/or the sensor 10 can be obtained from a compass device (to find a common north reference). However, it is not really needed to find a common north direction. Important is the orientation of the launcher 20 relative to any suitable reference direction defined by the sensor 10 - whether or not this is the true north direction. The sensor 10 will determine the position/path of the target 50 based on its local coordinate system associated with this reference direction.

According to further embodiments, multiple identification marks 110 can be installed in a predetermined way on or near the launcher 20 to allow the determination of the orientation of the launcher 20 relative to the sensor 10. By this, not only the horizontal orientation can be determined, but also any inclination can be sensed.

Another way for determining the orientation of the launcher 20 is to use the identification mark 110 for this purpose (e.g. the racon). If the exemplary racon includes a directional antenna, the direction of the incoming radar signal can be determined and sent back to the fire control sensor 10 or to the processing unit 120 to determine the orientation of the launcher 20, which is possible at least as long as the orientation of the identification mark 110 (e.g. the beacon) relative to the launcher 20 is known. This way will also provide reliable results, since the coarse positioning of the launcher 20 will be known from the mission planning so that ghost positions can be excluded.

Hence, the complete positioning relies merely on the weather-independent radar signal from the fire control sensor 10 whose characteristics is known or can be transmitted using the communication links 131, 132. Thus, the racon can easily detect and identify signals from the fire control sensor 10. This way of determining the orientation of the launcher 20 has particular advantages over the usage of a compass in regions where the compass does not always provide reliable and exact results (e.g. in the further northern hemisphere).

Since the positions of the target 50 can be tracked over the time, also the flight direction of the target 50 relative to the sensor 10 can be determined. Hence, no compass devices are really needed in this scenario. In any case, the alignment process according to embodiments is independent from GPS, which might be jammed in GBAD scenarios.

In order to prevent any electronic support/counter measure (ESM/ECM) the racon 110 comprises an antenna with some directivity adjustable towards the direction of the exemplary radar 10. The adjustment/alignment scan (e.g. first scan to determine the relative position of the launcher) may then use minimum transmission power to avoid an ESM detection and thus negate an ECM attack of the alignment scan. Furthermore the directed response of the beacon prevents the detection of the launcher's location.

Embodiments may in different sized platforms as their dimensions typically increase with the system's engagement range. The fast alignment method enhances the system operation independent of the platform type.

For the system alignment it is of advantage if there is an undisturbed line-of-sight between sensor 10 and the launcher 20 or at least if the still present disturbances do not rule out the alignment. This needs some pre-planning of the positions with suitable maps and tools. For large dislocation distances, this may be a challenge, but still easier than alternative methods.

The description and drawings merely illustrate the principles of the disclosure. It will thus be appreciated that those skilled in the art will be able to devise various arrangements that, although not explicitly described or shown herein, embody the principles of the disclosure.

Furthermore, while each embodiment may stand on its own as a separate example, it is to be noted that in other embodiments the defined features can be combined differently, i.e. a particular feature descripted in one embodiment may also be realized in other embodiments.

### List of reference signs

- 10: fire control sensor (e.g. a radar)
- 50: target
- 20: (at least one) launcher
- 110: identification mark (racon, transponder etc.)
- 120: processing unit (controller)
- 131, 132: communication lines (links)

## Claims

1. A ground base air defense platform with:
a fire control sensor (10) for sensing a target (50), the fire control sensor (10) including a radar unit and is configured to track positions of the target (50);
at least one launcher (20) configured to launch missiles to hit the target (50);
wherein the fire control sensor (10) is configured to send track information via the launcher (20) to a missile of said missiles to hit the target (50);
and
a system to determine positions of the fire control sensor (10) relative to each of the at least one launcher (20),
for this the system comprising
an identification mark (110) installed at the at least one launcher (20) and being configured to respond to a signal from the fire control sensor (10); and
a processing unit (120) configured to determine, based on the response of the identification mark (110), a relative position between the at least one launcher (20) and the sensor (10) to enable a control of the missile to hit the target (50),
the identification mark (110) is a racon with an antenna with a directivity adjustable towards the radar unit so that an incoming radar signal can be received and sent back to the fire control sensor (10), and is configured to respond to a received signal from the fire control sensor (10) with a response signal that differs from a sensor transmission signal by at least one of the following: a transmission frequency, pulse frequency, a pulse width, a different pulse coding, an additional identification code transmitted back to the fire control sensor, wherein the processing unit (120) is an integrated part of the fire control sensor (10).

2. The platform according to claim 1, the system further comprising:
at least one link (131, 132) from the processing unit (120) to the fire control sensor (10) and/or to the at least one launcher (20),
wherein the processing unit (120) is configured to receive from the fire control sensor (10) via the at least one link (131, 132) data identifying the positions and/or a direction of the target (50) and data for determining the relative position of the at least one launcher (20) and the fire control sensor (10).

3. The platform according to claim 1 or 2, wherein the identification mark (110) is able to determine a direction of a signal from the fire control sensor (10) and the processing unit (120) is further configured to determine an orientation of the at least one launcher (20) relative to a reference direction.

4. The platform according to one of claims 1 to 3, further comprising at least one further identification mark of a same or different type as the identification mark (110) which are all to be installed at the at least one launcher (20) to determine an orientation of the at least one launcher (20) with respect to a reference direction.

5. The platform according to one of the preceding claims, wherein the fire control sensor (10) and/or the at least one launcher (20) include a compass for calibrating the fire control sensor (10) and/or the at least one launcher (20) relative to a common north direction.

6. A method for aligning a fire control sensor (10) comprising a radar unit and an integrated processing unit (120) with a launcher (20), **characterized by:**
Sensing (S110), by the fire control sensor (10), an identification mark (110) at the launcher (20), wherein the identification mark (110) is a racon with an antenna with a directivity adjustable towards the radar unit so that an incoming radar signal can be received and sent back to the fire control sensor (10), and is configured to respond to a received signal from the fire control sensor (10) with a response signal that differs from a sensor transmission signal by at least one of the following: a transmission frequency, pulse frequency, a pulse width, a different pulse coding, an additional identification code transmitted back to the fire control sensor;
Determining (S120), by the processing unit (120), based on the sensed identification mark (110), a relative position between the fire control sensor (10) and the launcher (20);
Determining (S130) and tracking positions of a target (50) by the fire control sensor (10); and
Controlling (S140) a missile launched by the launcher (20) based on the positions of the target (50) and the determined relative position to hit the target (50), wherein track information are sent by the fire control sensor (10) via the launcher (20) to the missile to hit the target (50).

7. The method according to claim 6, further comprising:
Determining an orientation of local coordinate systems of the fire control sensor (10) and/or the launcher (20) relative to a predetermined direction.

8. The method according to claim 6 or claim 7, wherein multiple launchers (20) with installed identification marks are associated to a fire control sensor (10), the method further comprising:
Determining positions of the multiple launchers relative to the fire control sensor (10); and thereafter
Controlling missiles launched by the multiple launchers based on track data from the fire control sensor (10).

## Patentansprüche

1. Bodenbasierte Luftverteidigungsplattform mit:
einem Feuerleitsensor (10) zum Abtasten eines Ziels (50), wobei der Feuerleitsensor (10) eine Radareinheit einschließt und konfiguriert ist, um Positionen des Ziels (50) zu verfolgen;
mindestens einen Werfer (20), der konfiguriert ist, um Flugkörper abzuschießen, um das Ziel (50) zu treffen;
wobei der Feuerleitsensor (10) konfiguriert ist, um Verfolgungsinformationen über den Werfer (20) an einen Flugkörper der Flugkörper zu senden, um das Ziel (50) zu treffen;
und
ein System, um Positionen des Feuerleitsensors (10) relativ zu jedem des mindestens einen Werfers (20) zu bestimmen, wobei das System hierfür umfasst:
eine Identifikationsmarkierung (110), die an dem mindestens einen Werfer (20) installiert ist und konfiguriert ist, um auf ein Signal von dem Feuerleitsensor (10) zu reagieren; und
eine Verarbeitungseinheit (120), die konfiguriert ist, um basierend auf der Antwort der Identifikationsmarkierung (110) eine relative Position zwischen dem mindestens einen Werfer (20) und dem Sensor (10) zu bestimmen, um eine Steuerung des Flugkörpers, um das Ziel (50) zu treffen, zu ermöglichen,
die Identifikationsmarkierung (110) ein Racon mit einer Antenne mit einer Richtwirkung ist, die zu der Radareinheit hin einstellbar ist, sodass ein eingehendes Radarsignal empfangen und an den Feuerleitsensor (10) zurückgesendet werden kann, und konfiguriert ist, um auf ein empfangenes Signal von dem Feuerleitsensor(10) mit einem Antwortsignal zu antworten, das sich von einem Sensorübertragungssignal durch mindestens eines der folgenden unterscheidet: einer Übertragungsfrequenz, Impulsfrequenz, einer Impulsbreite, einer unterschiedlichen Impulskodierung, einem zusätzlichen Identifikationscode, der an den Feuerleitsensor zurückübertragen wird, wobei die Verarbeitungseinheit (120) ein integrierter Teil des Feuerleitsensors (10) ist.

2. Plattform nach Anspruch 1, das System ferner umfassend:
mindestens eine Verbindung (131, 132) von der Verarbeitungseinheit (120) zu dem Feuerleitsensor (10) und/oder zu dem mindestens einen Werfer (20),
wobei die Verarbeitungseinheit (120) konfiguriert ist, um von dem Feuerleitsensor (10) über die mindestens eine Verbindung (131, 132) Daten zu empfangen, die die Positionen und/oder eine Richtung des Ziels (50) und Daten zum Bestimmen der relativen Position des mindestens einen Werfers (20) und des Feuerleitsensors (10) zu identifizieren.

3. Plattform nach Anspruch 1 oder 2, wobei die Identifikationsmarkierung (110) in der Lage ist, eine Richtung eines Signals von dem Feuerleitsensor (10) zu bestimmen, und die Verarbeitungseinheit (120) ferner konfiguriert ist, um eine Ausrichtung des mindestens einen Werfers (20) relativ zu einer Referenzrichtung zu bestimmen.

4. Plattform nach einem der Ansprüche 1 bis 3, ferner umfassend mindestens eine weitere Identifikationsmarkierung von einem gleichen oder unterschiedlichen Typ wie die Identifikationsmarkierung (110), die alle an dem mindestens einen Werfer (20) zu installieren sind, um eine Ausrichtung des mindestens einen Werfers (20) bezüglich einer Referenzrichtung zu bestimmen.

5. Plattform nach einem der vorstehenden Ansprüche, wobei der Feuerleitsensor (10) und/oder der mindestens eine Werfer (20) einen Kompass zum Kalibrieren des Feuerleitsensors (10) und/oder des mindestens einen Werfers (20) relativ zu einer gemeinsamen Nordrichtung einschließen.

6. Verfahren zum Ausrichten eines Feuerleitsensors (10) umfassend eine Radareinheit und eine integrierte Verarbeitungseinheit (120) mit einem Werfer (20), **gekennzeichnet durch:**
Abtasten (S110), durch den Feuerleitsensor (10), einer Identifikationsmarkierung (110) an dem Werfer (20), wobei die Identifikationsmarkierung (110) ein Racon mit einer Antenne mit einer Richtwirkung ist, die zu der Radareinheit hin einstellbar ist, sodass ein eingehendes Radarsignal empfangen und an den Feuerleitsensor (10) zurückgesendet werden kann, und konfiguriert ist, um auf ein empfangenes Signal von dem Feuerleitsensor (10) mit einem Antwortsignal zu antworten, das sich von einem Sensorübertragungssignal durch mindestens eines der folgenden unterscheidet: einer Übertragungsfrequenz, Impulsfrequenz, einer Impulsbreite, einer unterschiedlichen Impulskodierung, einem zusätzlichen Identifikationscode, der an den Feuerleitsensor zurückübertragen wird;
Bestimmen (S120), durch die Verarbeitungseinheit (120), basierend auf der abgetasteten Identifikationsmarkierung (110), einer relativen Position zwischen dem Feuerleitsensor (10) und dem Werfer (20);
Bestimmen (S130) und Verfolgen von Positionen eines Ziels (50) durch den Feuerleitsensor (10); und
Steuern (S140) eines durch den Werfer (20) abgeschossenen Flugkörpers basierend auf den Positionen des Ziels (50) und der bestimmten relativen Position, um das Ziel (50) zu treffen, wobei Verfolgungsinformationen durch den Feuerleitsensor (10) über den Werfer (20) an den Flugkörper gesendet werden, um das Ziel (50) zu treffen.

7. Verfahren nach Anspruch 6, ferner umfassend:
Bestimmen einer Ausrichtung von lokalen Koordinatensystemen des Feuerleitsensors (10) und/oder des Werfers (20) relativ zu einer vorbestimmten Richtung.

8. Verfahren nach Anspruch 6 oder 7, wobei mehrere Werfer (20) mit installierten Identifikationsmarkierungen einem Feuerleitsensor (10) zugeordnet sind, das Verfahren ferner umfassend:
Bestimmen von Positionen der mehreren Werfer relativ zu dem Feuerleitsensor (10); und danach
Steuern von Flugkörpern, die durch die mehreren Werfer, basierend auf Verfolgungsdaten von dem Feuerleitsensor (10) abgeschossen werden.

## Revendications

1. Plate-forme de défense aérienne de base terrestre comprenant :
un capteur de conduite de tir (10) permettant de détecter une cible (50), le capteur de conduite de tir (10) incluant une unité radar et est configuré pour suivre des positions de la cible (50) ;
au moins un lanceur (20) configuré pour lancer des missiles pour intercepter la cible (50) ;
dans lequel le capteur de conduite de tir (10) est configuré pour envoyer des informations de poursuite par l'intermédiaire du lanceur (20) à un missile desdits missiles pour intercepter la cible (50) ;
et
un système pour déterminer des positions du capteur de conduite de tir (10) par rapport à chacun de l'au moins un lanceur (20), pour cela le système comprenant
une marque d'identification (110) installée au niveau de l'au moins un lanceur (20) et étant configurée pour répondre à un signal provenant du capteur de conduite de tir (10) ; et
une unité de traitement (120) configurée pour déterminer, en fonction de la réponse de la marque d'identification (110), une position relative entre l'au moins un lanceur (20) et le capteur (10) pour permettre un guidage du missile pour intercepter la cible (50),
la marque d'identification (110) est un racon doté d'une antenne ayant une directivité réglable vers l'unité radar de sorte qu'un signal radar entrant peut être reçu et renvoyé au capteur de conduite de tir (10), et est configurée pour répondre à un signal reçu du capteur de conduite de tir (10) avec un signal de réponse qui diffère d'un signal de transmission de capteur par au moins l'un des éléments suivants : une fréquence de transmission, une fréquence d'impulsion, une largeur d'impulsion, un codage d'impulsion différent, un code d'identification supplémentaire retransmis au capteur de conduite de tir, dans lequel l'unité de traitement (120) est une partie intégrée du capteur de conduite de tir (10).

2. Plate-forme selon la revendication 1, le système comprenant en outre :
au moins une liaison (131, 132) de l'unité de traitement (120) au capteur de conduite de tir (10) et/ou à l'au moins un lanceur (20),
dans lequel l'unité de traitement (120) est configurée pour recevoir du capteur de conduite de tir (10) par l'intermédiaire de l'au moins une liaison (131, 132) des données identifiant les positions et/ou une direction de la cible (50) et des données permettant de déterminer la position relative de l'au moins un lanceur (20) et du capteur de conduite de tir (10).

3. Plate-forme selon la revendication 1 ou 2, dans laquelle la marque d'identification (110) est capable de déterminer une direction d'un signal provenant du capteur de conduite de tir (10) et l'unité de traitement (120) est en outre configurée pour déterminer une orientation de l'au moins un lanceur (20) par rapport à une direction de référence.

4. Plate-forme selon l'une des revendications 1 à 3, comprenant en outre au moins une marque d'identification supplémentaire d'un type identique ou différent de la marque d'identification (110) qui doivent toutes être installées au niveau de l'au moins un lanceur (20) pour déterminer une orientation de l'au moins un lanceur (20) par rapport à une direction de référence.

5. Plate-forme selon l'une des revendications précédentes, dans laquelle le capteur de conduite de tir (10) et/ou l'au moins un lanceur (20) comportent un compas pour étalonner le capteur de conduite de tir (10) et/ou l'au moins un lanceur (20) par rapport à une direction nord commune.

6. Procédé d'alignement d'un capteur de conduite de tir (10) comprenant une unité radar et une unité de traitement intégrée (120) équipée d'un lanceur (20), **caractérisé par** :
la détection (S110), par le capteur de conduite de tir (10), d'une marque d'identification (110) au niveau du lanceur (20), dans lequel la marque d'identification (110) est un racon doté d'une antenne ayant une directivité réglable vers l'unité radar de sorte qu'un signal radar entrant peut être reçu et renvoyé au capteur de conduite de tir (10), et est configurée pour répondre à un signal reçu du capteur de conduite de tir (10) avec un signal de réponse qui diffère d'un signal de transmission de capteur par au moins l'un des éléments suivants : une fréquence de transmission, une fréquence d'impulsion, une largeur d'impulsion, un codage d'impulsion différent, un code d'identification supplémentaire retransmis au capteur de conduite de tir ;
la détermination (S120), par l'unité de traitement (120), en fonction de la marque d'identification (110) détectée, d'une position relative entre le capteur de conduite de tir (10) et le lanceur (20) ;
la détermination (S130) et le suivi de positions d'une cible (50) par le capteur de conduite de tir (10) ; et
le guidage (S140) d'un missile lancé par le lanceur (20) en fonction des positions de la cible (50) et de la position relative déterminée pour intercepter la cible (50), dans lequel des informations de poursuite sont envoyées par le capteur de conduite de tir (10) par l'intermédiaire du lanceur (20) au missile pour intercepter la cible (50).

7. Procédé selon la revendication 6, comprenant en outre :
la détermination d'une orientation des systèmes de coordonnées locaux du capteur de conduite de tir (10) et/ou du lanceur (20) par rapport à une direction prédéterminée.

8. Procédé selon la revendication 6 ou la revendication 7, dans lequel des lanceurs multiples (20) ayant des marques d'identification installées sont associés à un capteur de conduite de tir (10), le procédé comprenant en outre :
la détermination de positions des lanceurs multiples par rapport au capteur de conduite de tir (10) ; et après cela
le guidage de missiles lancés par les lanceurs multiples en fonction de données de poursuite du capteur de conduite de tir (10).
